# EUROPEAN PATENT APPLICATION

(11) **EP 1 710 933 A1**
(43) Date of publication of application: **11.10.2006**
(21) Application number: 05745946.3
(22) Date of filing: 02.06.2005
(51) Int. Cl.: H04B 10/02, H04B 10/00, H04B 10/18

(54) **OPTICAL TRANSMISSION DEVICE AND OPTICAL TRANSMISSION SYSTEM**

(30) Priority: 18.06.2004 JP 2004180792
(71) Applicant: Matsusita Electric Industrial Co., Ltd., Kadoma-shi, Osaka 571-8501 (JP)
(72) Inventor: ODA, Katsuya., c/o Matsushita EL.Ind.Co.Ltd, Osaka-shi, Osaka 540-6319 (JP); TOHGOH, Hitomaro, c/o Matsushita EL.Ind.Co.Ltd, Osaka-shi, Osaka 540-6319 (JP); SATO, Yoshiyasu., c/o Matsushita EL.Ind.Co.Ltd, Osaka-shi, Osaka 540-6319 (JP); ASANO, Hiroaki., c/o Matsushita EL.Ind.Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/010157
(87) International publication number: WO 2005/125057

(57) **Abstract**

An object of the invention is to clear up factors in deterioration due to optical reflection and to provide an optical transmission apparatus and an optical transmission system in which a superior optical transmission characteristic can be obtained for analog signals even if a reflection phenomenon occurs in an optical transmission line. There are provided a frequency converter (3) for converting the frequency band of a to-be-transmitted electric signal into a predetermined frequency band higher that this frequency band, and a semiconductor laser (4) serving as an electro-optic converter for performing electro-optic conversion upon the frequency-converted electric signal.

## Description

### Technical Field

The present invention relates to an optical transmission apparatus for optically transmitting analog signals such as video signals or mobile radio communication signals by use of an optical transmission line, and an optical transmission system having the optical transmission apparatus.

### Background Art

When analog signals such as video signals or mobile radio communication signals are transmitted through an optical transmission line such as an optical fiber, a direct modulation system using a semiconductor laser to perform direct modulation or an external modulation system using an external modulator is known as a method for converting electric signals into optical signals.
Distortion characteristic after optical transmission and securement of CNR (Carrier-to-Noise Ratio) can be mentioned as technical problems in optical analog transmission. For example, in electro-optic conversion using the direct modulation system, deterioration in characteristic occurs mainly in a semiconductor laser itself for use in an electro-optic converter. This deterioration in characteristic appears conspicuously particularly when a high-frequency analog signal is transmitted. In order to avoid this, a semiconductor laser superior in high frequency characteristic may be used. However, the semiconductor laser superior in high frequency characteristic is generally expensive. On the other hand, in electro-optic conversion using the external modulation system, high frequency characteristic and noise deterioration are generally improved. However, an external modulator itself such as an LN converter or an EA converter is very expensive.

In order to make it possible to use an inexpensive laser while keeping a good transmission characteristic in an optical transmission system, there has been proposed a system in which the transmission frequency of an analog RF signal is converted into an intermediate frequency (hereinafter referred to as "IF") lower than the transmission frequency, and the converted signal is transmitted through an optical fiber (for example, see Patent Document 1). In this system, for example, as shown in Fig. 9, the IF signal and a non-modulated signal are multiplexed in a low frequency band by a multiplexer unit 101 on the transmitter side, modulated directly by an electro-optic converter 102 and transmitted optically. On the other hand, on the receiver side, the received non-modulated signal is opto-electrically converted by an opto-electric converter 103, passed through a demultiplexer unit 104, and multiplied by a multiplying unit 105. Of the multiplied wave (local signal) obtained thus, the IF signal is frequency-converted by a frequency converter unit 106 so as to obtain an RF signal. In such a system, it is therefore possible to lower the modulation frequency of the laser. Thus, an inexpensive laser can be used. There is known another system than the aforementioned system, that is, another optical analog transmission method about the frequency layout of a non-modulated signal (local signal) (for example, see Patent Document 2). In this optical analog transmission method, the local signal frequency is set at a high frequency band at least 1 GHz distant from the IF signal. Thus, deterioration of a transmitted signal is suppressed.

The aforementioned two background-art examples are techniques about the method for improving the characteristic deterioration caused by a semiconductor laser. Deterioration due to optical reflection in an optical transmission line is known as another factor of deterioration in distortion characteristic or CNR.
Patent Document 1: JP-A-6-164427
Patent Document 2: JP-A-11-355209
Disclosure of the Invention
Problems that the Invention is to Solve

As a solution to such characteristic deterioration caused by optical reflection, generally, fiber fusion or obliquely polished fiber connection hardly causing reflection is used or an optical isolator is added in the background-art optical analog transmission. For this reason, a fiber transmission line for transmitting analog signals is more expensive than a fiber transmission line for transmitting digital signals.

In addition, as described above, in the background-art optical analog transmission, how to prevent a reflection phenomenon from occurring in an optical transmission line is an important problem because the characteristic deteriorates greatly due to optical reflection in the optical transmission line. It is therefore difficult to realize analog transmission with a superior optical transmission characteristic as described above, for example, by use of an optical transmission line such as a fiber having an unknown return loss or a cheap existing fiber (dark fiber) having a low return loss and provided for digital transmission, or an optical transmission line having a connector for connecting fibers with each other.

The present invention was developed in consideration of the aforementioned situation. An object of the invention is to clear up factors in deterioration due to optical reflection and to provide an optical transmission apparatus and an optical transmission system in which a superior optical transmission characteristic can be obtained for analog signals even if a reflection phenomenon occurs in an optical transmission line.

### Means for Solving the Problems

An optical transmission apparatus according to the present invention is adapted to include a frequency converter for converting a frequency band of a to-be-transmitted electric signal into a specific frequency band higher than the frequency band, and an electro-optic converter for performing electro-optic conversion upon the frequency-converted to-be-transmitted electric signal by means of a laser or an optical modulator.
With this configuration, in optical transmission with reflection portions on the optical transmission line, the frequency of a signal to be transmitted is converted into a specific frequency higher than the signal frequency, and the frequency-converted signal is transmitted. As a result, deterioration in transmission characteristic due to influence of reflection can be prevented from occurring, for the reason which will be described later. Thus, good transmission can be obtained even in the optical transmission line where reflection is present.

The optical transmission apparatus according to the present invention is designed so that a frequency converter converting the frequency band into a frequency band not lower than 500 MHz is used as the frequency converter, and a single-mode oscillation laser is used as the electro-optic converter.
With this configuration, in optical transmission with reflection portions on the optical transmission line and by use of a single-mode laser as the electro-optic converter, the transmission frequency of a signal to be transmitted is converted into an optimal frequency range causing no deterioration in transmission characteristic due to influence of multiple reflection, that is, into 500 MHz or higher when the transmission frequency is within a frequency range with no reflection resistance. Thus, good transmission can be obtained even in the optical transmission line where reflection is present.

In addition, the optical transmission apparatus according to the present invention is designed so that a frequency converter converting the frequency band into a frequency band not lower than 200 MHz is used as the frequency converter, and a multi-mode oscillation laser is used as the electro-optic converter.
With this configuration, in optical transmission with reflection portions on the optical transmission line and by use of a multi-mode laser as the electro-optic converter, the transmission frequency of a signal to be transmitted is converted into an optimal frequency range causing no deterioration in transmission characteristic due to influence of reflected return light, that is, into 200 MHz or higher when the transmission frequency is within a frequency range with no reflection resistance. Thus, good transmission can be obtained even in the optical transmission line where reflection is present.

In addition, an optical transmission apparatus according to the present invention is adapted to include a frequency converter for converting a frequency band of a to-be-transmitted electric signal into a frequency band lower than the frequency band and not lower than 500 MHz, and an electro-optic converter for performing electro-optic conversion upon the frequency-converted to-be-transmitted electric signal by means of a single-mode oscillation laser.
With this configuration, in optical transmission with reflection portions on the optical transmission line and by use of a single-mode laser as the electro-optic converter, the transmission frequency of a signal to be transmitted is converted into an optimal frequency range causing no deterioration in transmission characteristic due to influence of multiple reflection, that is, into a frequency lower than the frequency of the to-be-transmitted signal but not lower than 500 MHz when the transmission frequency is within a frequency range with no reflection resistance. Thus, good transmission can be obtained even in the optical transmission line where reflection is present.

Further, an optical transmission apparatus according to the present invention is adapted to include a frequency converter for converting a frequency band of a to-be-transmitted electric signal into a frequency band lower than the frequency band and not lower than 200 MHz, and an electro-optic converter for performing electro-optic conversion upon the frequency-converted to-be-transmitted electric signal by means of a multi-mode oscillation laser.
With this configuration, in optical transmission with reflection portions on the optical transmission line and by use of a multi-mode laser as the electro-optic converter, the transmission frequency of a signal to be transmitted is converted into an optimal frequency range causing no deterioration in transmission characteristic due to influence of reflected return light, that is, into 200 MHz or higher when the transmission frequency is within a frequency range with no reflection resistance. Thus, good transmission can be obtained even in the optical transmission line where reflection is present.

Moreover, an optical transmission system according to the present invention is adapted to include an optical transmission apparatus for performing electro-optic conversion upon a to-be-transmitted electric signal and feeding out the to-be-transmitted electric signal to an optical transmission line, the optical transmission line for transmitting an optical signal transmitted from the optical transmission apparatus, and an optical reception apparatus for receiving the optical signal transmitted from the optical transmission apparatus through the optical transmission line and performing opto-electric conversion upon the optical signal so as to receive the original electric signal, an optical transmission line with total return loss of not lower than 60 dB being used as the optical transmission line; wherein the aforementioned optical transmission apparatus is used as the optical transmission apparatus.
According to the present invention, the return loss due to Rayleigh scattering occurring in a flat polished connector or a long-distance fiber is about 30 dB. It has been therefore obtained knowledge that when multiple reflection due to such reflection is present in the optical transmission line, the characteristic deterioration caused by multiple-reflected light can be suppressed to be lower than 1 dB if the intermediate frequency f (IF) is set to satisfy the expression 500 MHz<f in this configuration. Similarly, it has been obtained knowledge that the characteristic deterioration caused by return light can be suppressed to be lower than 1 dB if the intermediate frequency f (IF) is set to satisfy the expression 200 MHz<f.

### Effect of the Invention

According to the present invention, in optical transmission where reflection portions are present on an optical transmission line, the frequency of an electric signal to be transmitted is converted into a frequency within a predetermined range higher or lower than the frequency, and electro-optical conversion is performed upon the frequency-converted signal by a specific electro-optic converter. When the signal is transmitted thus, there occurs no deterioration in transmission characteristic due to influence of optical reflection. Thus, a good optical transmission characteristic can be obtained even in the optical transmission line where optical reflection is present.

### Brief Description of the Drawings

[Fig. 1] An explanatory diagram showing the behavior of an optical signal when there are reflection portions in an optical transmission line.
[Fig. 2] An explanatory diagram showing the state of signal transmission when there is no reflection portion in an optical transmission line.
[Fig. 3] An explanatory diagram showing a mechanism of occurrence of low-frequency region phase noise due to multiple reflection when there are reflection portions.
[Fig. 4] A graph showing frequency dependency of CNR when multiple reflection is present.
[Fig. 5] A graph showing frequency dependency of CNR when return light is present.
[Fig. 6] A schematic configuration diagram showing an optical transmission system according to a first embodiment of the present invention.
[Fig. 7] A schematic configuration diagram showing an optical transmission system according to a second embodiment of the present invention.
[Fig. 8] A schematic configuration diagram showing an optical transmission system according to a third embodiment of the present invention.

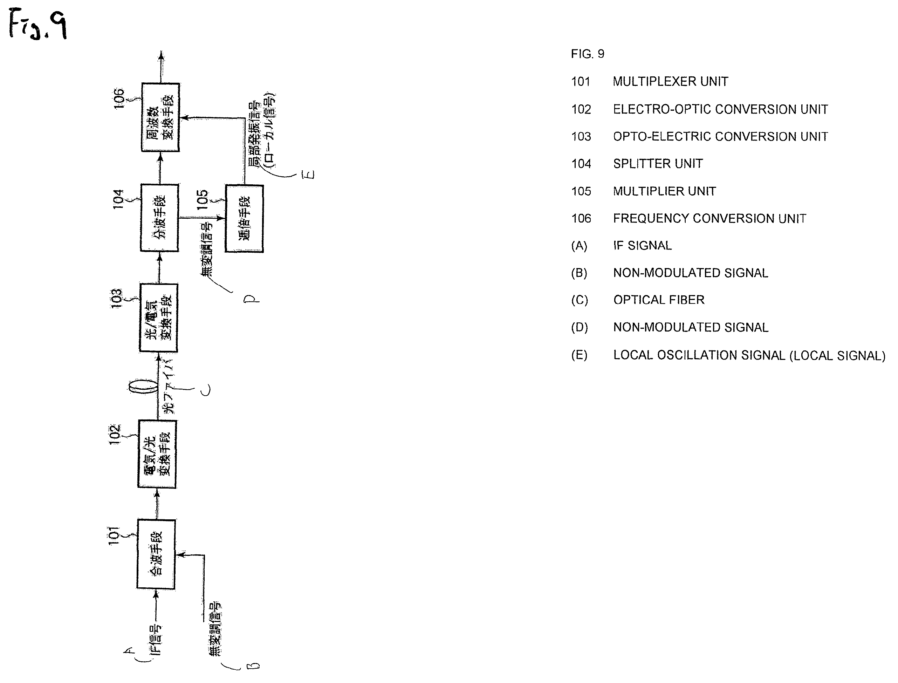

[Fig. 9] A schematic configuration diagram of a background-art optical analog apparatus.

### Description of Reference Numerals

- 1: multiplexer unit
- 2: signal source
- 2A: first electric transmission line
- 2B: second electric transmission line
- 3: first frequency conversion device
- 4: semiconductor laser (electro-optic converter; E/O converter)
- 5: optical fiber transmission line
- 6: photodiode (opto-electric converter; O/E converter)
- 7: second frequency conversion device

### Best Mode for Carrying Out the Invention

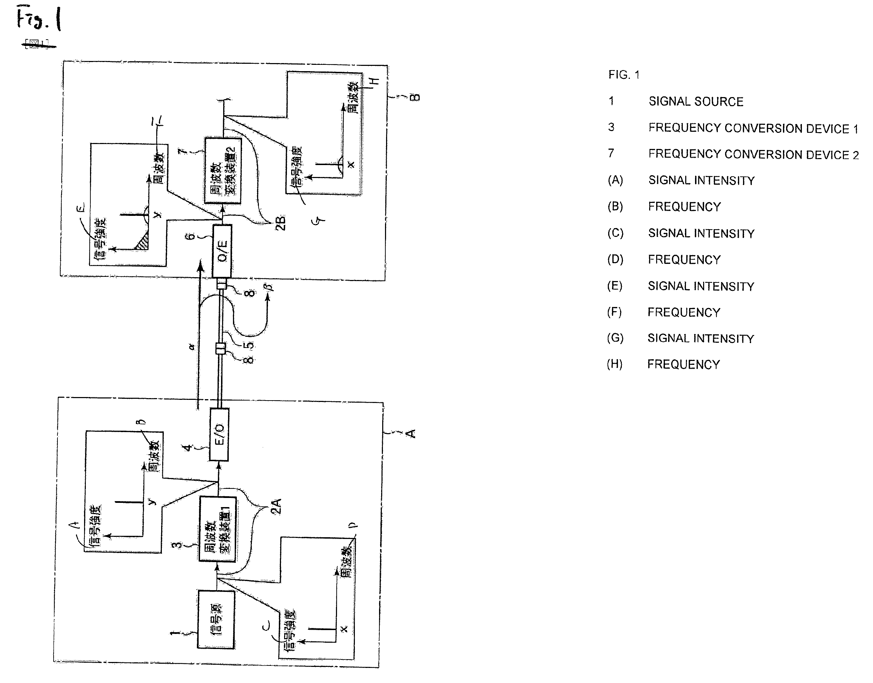

Embodiments of the invention will be described below in detail with reference to the accompanying drawings.
[First Embodiment]
Fig. 1 is a schematic configuration diagram showing an optical transmission system according to a first embodiment of the present invention. This optical transmission system includes an optical transmission apparatus A and a reception apparatus B. The optical transmission apparatus A has a signal source 1, a first electric transmission line 2A, a first frequency conversion device 3 and a semiconductor laser 4 serving as an electro-optic converter (hereinafter referred to as E/O converter). The reception apparatus B has an optical fiber transmission line 5, a photodiode 6 serving as an opto-electric converter (hereinafter referred to as O/E converter), a second electric transmission line 2B and a second frequency conversion device 7.
Of them, the first frequency conversion device 3 provided on the optical transmission apparatus A side converts a frequency band of an electric signal transmitted from the signal source 1, into an intermediate frequency (IF) lower than this frequency band, that is, into a specific frequency band with reflection resistance.

In the optical transmission system according to this embodiment, the first frequency conversion device 3 converts the frequency band into an intermediate frequency (IF) which is a frequency (specifically described later) with reflection resistance. Accordingly, even if there is a reflection portion 8 in the optical fiber transmission line 5, superior optical transmission having no characteristic deterioration can be performed. In other words, even if an electronic signal of a transmission frequency x output from the signal source 1 is within a frequency range having no reflection resistance, the electronic signal can be transmitted with the frequency being converted into a frequency f in an optimal frequency band where there is no fear that deterioration in transmission characteristic occurs due to influence of multiple reflection or the like. Thus, good transmission can be obtained even in the optical fiber transmission line 5 where reflection is present.

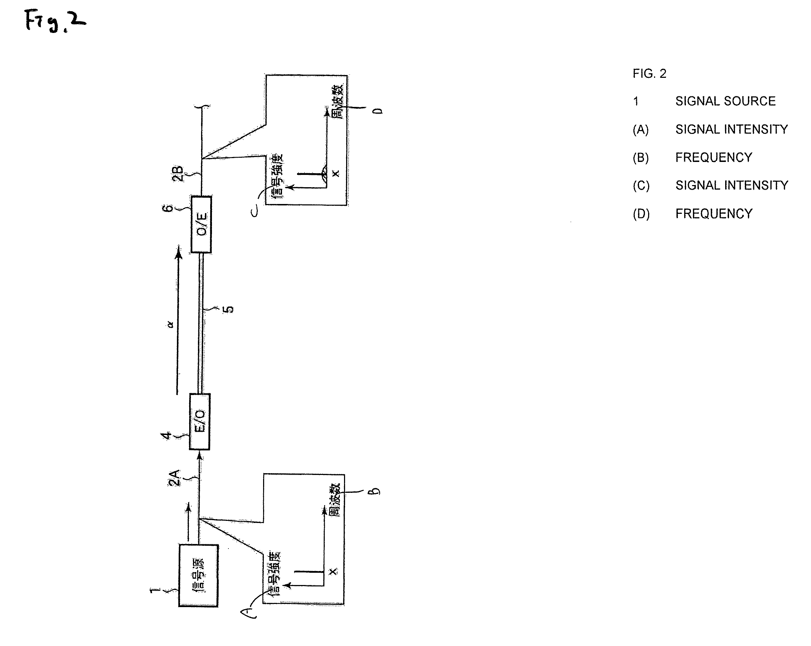

Factors of characteristic deterioration due to optical reflection are found by the inventor of the present invention and will be described here.
(I) First, with reference to Fig. 2, description will be made about the condition of transmission of an optical signal when there occurs no reflection phenomenon (reflection portion) in the optical fiber transmission line 5.
A signal of a frequency x (electric signal frequency x) output from the signal source 1 is put into the semiconductor laser 4 serving as an E/O converter (electro-optic converter) through the electric transmission line 2A, so as to generate an optical signal with modulated intensity. Next, this optical signal with modulated intensity is transmitted through the optical fiber transmission line 5, and O/E-converted in the photodiode 6 serving as an O/E converter (opto-electric converter). Here, when there occurs no reflection portion in the optical fiber transmission line 5, only deterioration components generated in the semiconductor laser 4 (E/O converter), the photodiode 6 (O/E converter) and so on are added to the transmitted signal (see the shaded portion in Fig. 2).

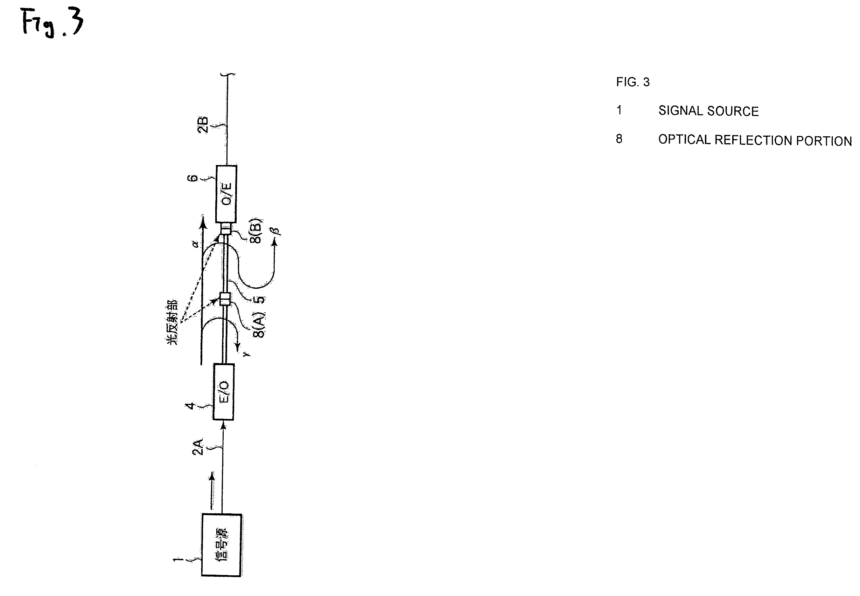

(II) On the other hand, Fig. 3 shows the condition of transmission of an optical signal when there occurs a reflection phenomenon (reflection portion 8) in the optical fiber transmission line 5.
An optical signal output from the signal source 1, put in the semiconductor laser 4 serving as an E/O converter through the electric transmission line 2A and E/O-converted in the semiconductor laser 4 is guided into the optical fiber transmission line 5 and propagated therein. The optical signal is detected and then converted into an electric signal by the photodiode 6 serving as an O/E converter.
However, when there are reflection portions 8 in the optical fiber transmission line 5 (assume that there are two reflection portions 6), there are not only a component (α) incident directly on the photodiode 6 from the semiconductor laser 4 but also a component (β) derived from light multiple-reflected between reflection portions 8A and 8B and incident on the photodiode 5 additionally with a delay, and a component (γ) derived from light Fresnel-reflected by the reflection portion 8A and incident on the semiconductor laser 4 again. Here, when the optical signal component (α) propagated directly and the optical signal component (β) multiple-reflected are detected in the photodiode 6, the optical signal component (β) appears as beat noise in the electric signal, and behaves as an unnecessary component for the original optical signal component (α). Thus, the transmission quality is affected.

Next, qualitative description will be made about behavior of light when multiple reflection occurs due to the existence of the reflection portions 8 (8A and 8B) in the optical fiber transmission line 5, and particularly about the mechanism of occurrence of low-frequency region phase noise.

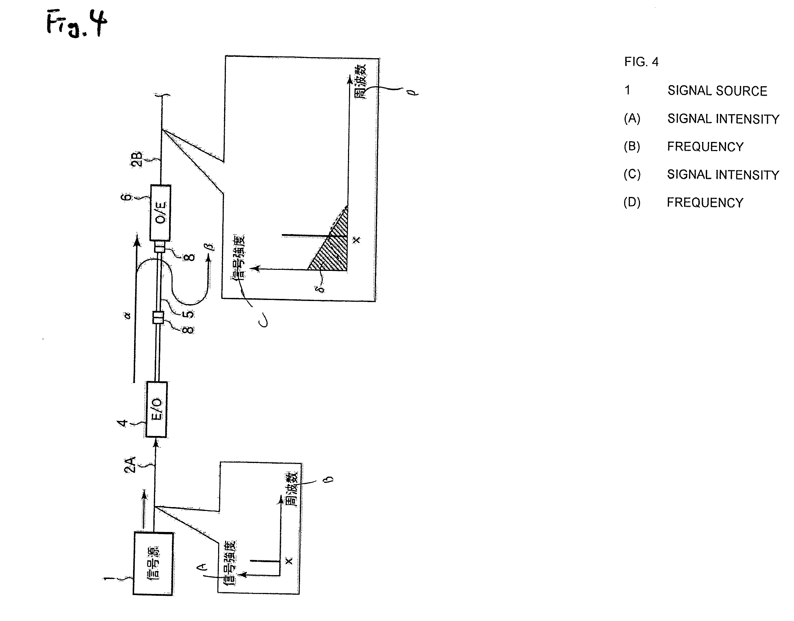

Fig. 4 shows the condition of signal transmission at the time of multiple reflection. When this multiple reflection exists in the optical fiber transmission line 5, a multiple-reflection component is incident on the photodiode 6 (component β in Fig. 4) in addition to an optical signal (component α in Fig. 4) incident directly on the photodiode 6 serving as an O/E converter. On the other hand, square-law detection is applied to those components in the photodiode 6 serving as an O/E converter, so that there occurs beat noise serving as an unnecessary component for the original signal. Particularly due to a very small difference in optical frequency between the direct light component (α) from the semiconductor laser 4 and the multiple-reflected light component (β), an electric signal based on the square-law detection concentrates in a low frequency region, so that phase noise (shaded portion δ, which will be referred to as "low-frequency region phase noise") is added. As a result, when the electric signal frequency x is low, the aforementioned low-frequency region phase noise component (δ) is also added to the original phase noise, causing deterioration of the transmission characteristic.

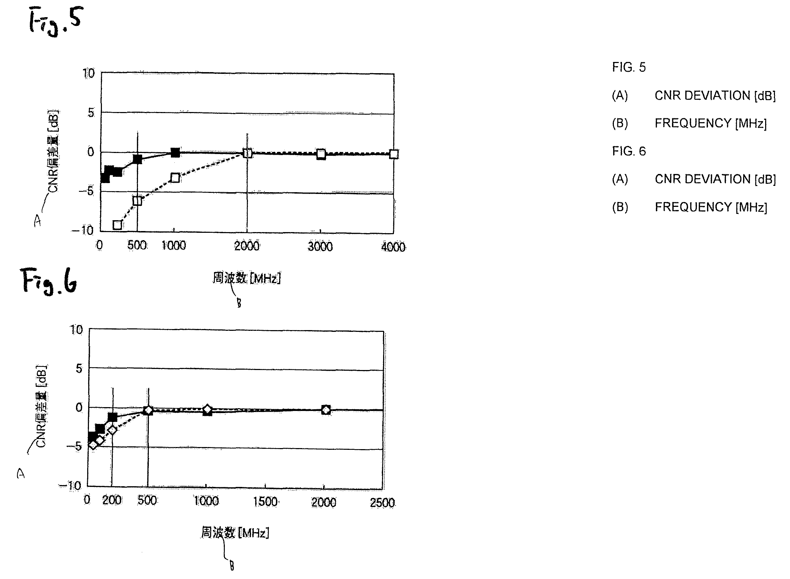

The present inventor carried out testing for evaluating the CNR characteristic when multiple reflection was present due to the existence of the reflection portions 8 in the optical fiber transmission line 5. Fig. 5 shows CNR frequency dependency when the multiple reflection was present. In Fig. 5, the ordinate designates a deviation from CNR in the state (non-reflection state) where there is no optical reflection. It is understood from Fig. 5 that the CNR characteristic deteriorates greatly in a region lower than a frequency (2 GHz in Fig. 5), and it can be confirmed that the CNR characteristic has frequency dependency.
In addition, an optical isolator is generally provided in a light output portion of the semiconductor laser 4. In recent years, however, due to request to reduce the cost, there is a case that no optical isolator is used particularly when a Fabry-Perot type semiconductor laser having a certain amount of resistance against reflected return light is used. In this case, a part of an optical signal reflected by the reflection portion 8 (mainly shown by γ in Fig. 3; another part reflected by the reflection portion 8B may penetrate the reflection portion 8A and goes backwards, but it can be ignored approximately) returns to the semiconductor laser 4 itself. As a result, when this reflected return light increases conspicuously, the oscillation condition of the semiconductor laser 4 is made unstable.

Therefore, testing to evaluate frequency dependency was carried out upon reflected return light (optical signal component γ) in the same manner as upon the aforementioned multiple reflection. Fig. 6 shows the frequency dependency of CNR when the reflected return light was present.
It is understood from Fig. 6 that the CNR characteristic deteriorates greatly in a region lower than a certain frequency (2 GHz in Fig. 6), and it can be confirmed that the transmission characteristic has frequency dependency when reflected return light is present.
In such a manner, the present inventor acquired knowledge that when the reflection portions 8 are present in the optical transmission line 5, the CNR characteristic deteriorates due to the aforementioned reflected light components (optical signal components β and γ) while the deterioration is smaller on the high frequency side due to frequency dependency thereof. The present inventor can first obtain this behavior of light in the light transmission line as a result of various experiments and theoretical consideration as described above.

[Second Embodiment]
Next, description will be made about an optical transmission system according to a second embodiment of the present invention. In this embodiment, parts the same as those in the first embodiment are referenced correspondingly, and redundant description thereof will be avoided.

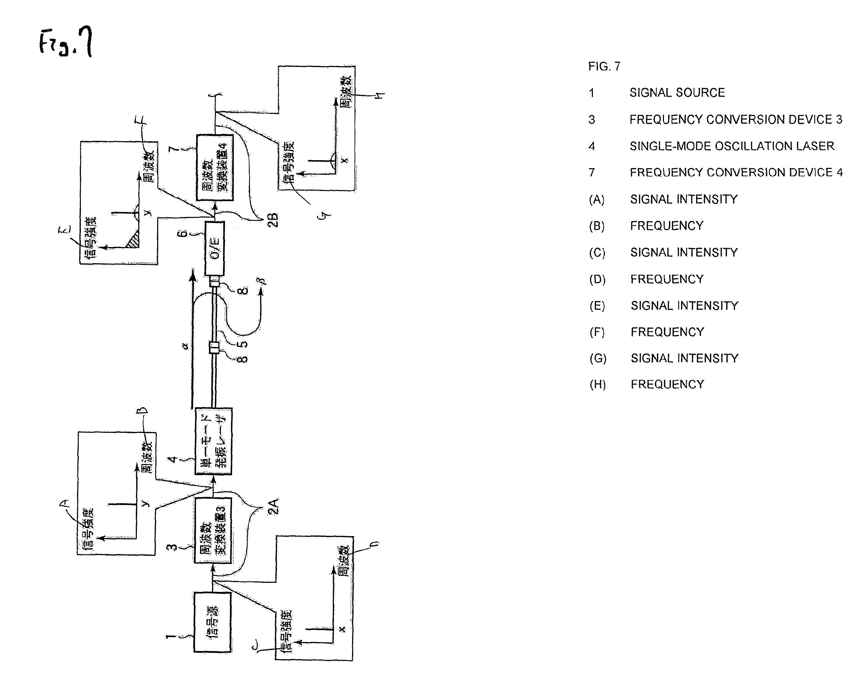

Fig. 7 is a schematic configuration diagram showing the optical transmission system according to this embodiment. In an optical transmission apparatus of this optical transmission system, a frequency band of an electric signal transmitted from a signal source 1 is converted into a predetermined frequency band higher than the frequency band by a first frequency conversion device 3 differently from that in the first embodiment. In this embodiment, a semiconductor laser based on single-mode oscillation is used as a semiconductor laser 4 serving as an electro-optic converter, in the same manner as in the first embodiment.

Here, in the optical transmission apparatus according to this embodiment using the single-mode oscillation semiconductor laser 4 as an E/O converter, the present inventor measured CNR characteristic after transmission for an intermediate frequency (IF) f in the same manner as in Fig. 5. That is, when two reflection portions 8 appeared in an optical fiber transmission line 5, testing for evaluating CNR characteristic while changing multiple reflection (total return loss between the two points) due to these reflection portions 8 was performed.

With deterioration in reflection condition, 1 dB or more deterioration was observed also in CNR. Thus, it was proved that reflection resistance has frequency dependency. That is, it was proved that in a bad reflection condition (total return loss<40 dB; the broken line portion in the graph of Fig. 5) where Fresnel reflection (reflection occurring in an interface between different refractive indexes) exists, characteristic deterioration of a transmitted signal can be avoided in spite of multiple reflection caused by such reflection when the intermediate frequency (IF) f is set to satisfy the following expression:

2GHz<f

The return loss due to Rayleigh scattering (scattering phenomenon caused by resonance between light and crystal grains) occurring in a flat polished connector or a long-distance fiber is about 30 dB. It was therefore proved that when multiple reflection due to such reflection or such scattering is present in the optical transmission line (total return loss<60 dB; the solid line portion in Fig. 5), the characteristic deterioration caused by optical reflection can be suppressed to be lower than 1 dB if the intermediate frequency f (IF) is set to satisfy the following expression:

500MHz<f ... (1)

In such a manner, in the optical transmission apparatus according to this embodiment using the single-mode oscillation semiconductor laser 4, the intermediate frequency f is set in a range satisfying the expression (1). Accordingly, even if two reflection portions are present in the optical fiber transmission line 5, good transmission without characteristic deterioration caused by multiple reflection can be realized.

[Third Embodiment]
Next, an optical transmission system according to a third embodiment of the present invention will be described. In this embodiment, parts the same as those in the first embodiment are referenced correspondingly, and redundant description thereof will be avoided.

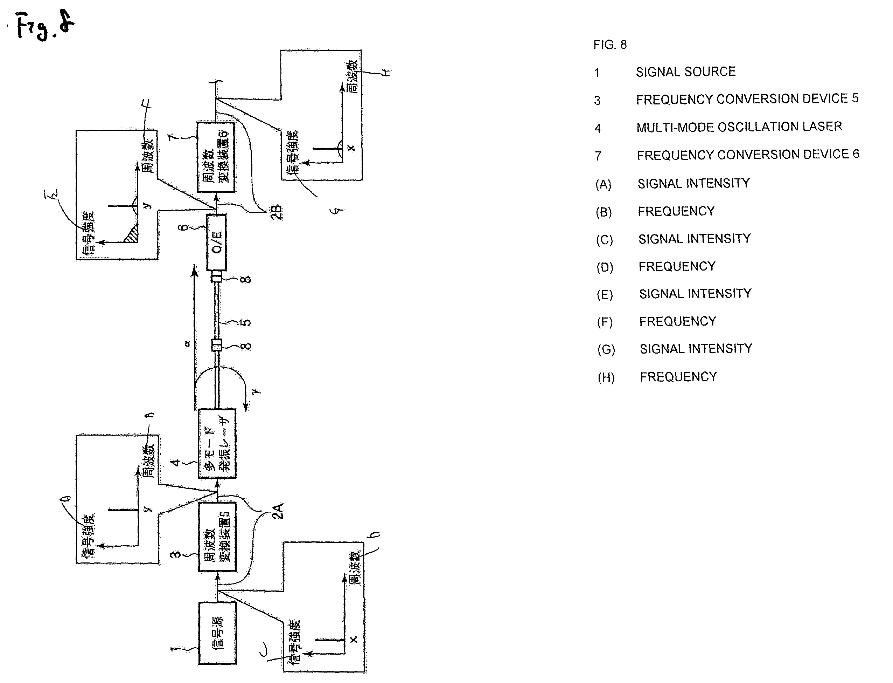

Fig. 8 is a schematic configuration diagram showing the optical transmission system according to this embodiment. In an optical transmission apparatus of this optical transmission system, a multi-mode oscillation semiconductor laser 4 is used as an E/O converter.

Here, by use of the optical transmission apparatus according to this embodiment having the multi-mode oscillation semiconductor laser 4 as an E/O converter, the present inventor measured CNR characteristic after signal transmission for an intermediate frequency (IF) f in the same manner as in Fig. 6 while changing the amount of reflection (return loss at one point) incident again on the semiconductor laser 4 from a reflection portion 8 of an optical fiber transmission line 5.
According to this measurement, with deterioration in reflection condition in the reflection portion 8, deterioration in CNR characteristic was observed. Thus, it was also proved here that reflection resistance has frequency dependency. That is, it was proved that in a bad reflection condition (return loss<20 dB; the broken line in the graph of Fig. 5) where Fresnel reflection exists, characteristic deterioration of a transmitted signal can be avoided in spite of return light due to such reflection when the intermediate frequency (IF) is set to satisfy the following expression:

500MHz<f

The return loss due to Rayleigh scattering occurring in a flat polished connector or a long-distance fiber is about 30 dB. It was therefore proved that when such reflection is present in the optical transmission line (return loss<30 dB; the solid line in Fig. 5), the characteristic deterioration caused by return light due to optical reflection can be suppressed to be lower than 1 dB if the intermediate frequency is set to satisfy the following expression:

200MHz<f ... (2)

In such a manner, in the optical transmission apparatus according to this embodiment using the multi-mode oscillation semiconductor laser 4, the intermediate frequency f is set in a range satisfying the expression (2). Accordingly, even if the reflection portions 8 are present in the optical fiber transmission line 5, good transmission without characteristic deterioration caused by reflected return light can be realized.

The present invention is not limited to the aforementioned embodiments at all. The invention can be carried out in various modes within a range not departing from its gist.

Although the present invention has been described in detail with reference to its specific embodiments, it is apparent for those skilled in the art that various changes or modifications can be made on the invention without departing from the spirit and scope of the invention.
This application is based on a Japanese patent application, Application No. 2004-180792 filed on June 18, 2004, the contents of which are incorporated herein by reference.

### Industrial Applicability

The present invention is provided with a frequency converter for converting a frequency band of a to-be-transmitted electric signal into a specific frequency band higher than the frequency band, and a semiconductor laser or an optical modulator serving as an electro-optic converter for performing electro-optic conversion upon the frequency-converted to-be-transmitted electric signal. There is an effect that a good optical transmission characteristic can be obtained even if a reflection phenomenon occurs in an analog signal in an optical transmission line. Further, the present invention is provided with a frequency converter for converting a frequency band of a to-be-transmitted electric signal into a frequency band lower than the frequency band and not lower than 500 MHz or 200 MHz, and a single-mode oscillation laser or a multi-mode oscillation laser serving as an electro-optic converter for performing electro-optic conversion upon the frequency-converted to-be-transmitted electric signal. Thus, there is a similar effect. Accordingly, the present invention is useful for an optical transmission apparatus or the like for optically transmitting an analog signal such as a video signal, a mobile radio communication signal or the like by use of an optical transmission line.

## Claims

1. An optical transmission apparatus, comprising:
a frequency converter that converts a frequency band of an electric signal to be transmitted, into a specific frequency band higher than the frequency band; and
an electro-optic converter that performs electro-optic conversion on the frequency-converted electric signal by a laser or an optical modulator.

2. The optical transmission apparatus according to claim 1, wherein a frequency converter converting the frequency band into a frequency band not lower than 500 MHz is used as the frequency converter, and a single-mode oscillation laser is used as the electro-optic converter.

3. The optical transmission apparatus according to claim 1, wherein a frequency converter converting the frequency band into a frequency band not lower than 200 MHz is used as the frequency converter, and a multi-mode oscillation laser is used as the electro-optic converter.

4. An optical transmission apparatus, comprising:
a frequency converter that converts a frequency band of an electric signal to be transmitted, into a frequency band lower than the frequency band and not lower than 500 MHz; and
an electro-optic converter that performs electro-optic conversion on the frequency-converted electric signal by a single-mode oscillation laser.

5. An optical transmission apparatus, comprising:
a frequency converter that converts a frequency band of an electric signal to be transmitted, into a frequency band lower than the frequency band and not lower than 200 MHz; and
an electro-optic converter that performs electro-optic conversion on the frequency-converted electric signal by a multi-mode oscillation laser.

6. An optical transmission system, comprising an optical transmission apparatus that performs electro-optic conversion on an electric signal to be transmitted and feeds out the electric signal to an optical transmission line, the optical transmission line that transmits an optical signal transmitted from the optical transmission apparatus, and an optical reception apparatus that receives the optical signal transmitted from the optical transmission apparatus through the optical transmission line and performs opto-electric conversion on the optical signal so as to receive the original electric signal,
wherein an optical transmission line with total return loss of not lower than 60 dB is used as the optical transmission line; and
wherein an optical transmission apparatus according to any one of claims 1 through 5 is used as the optical transmission apparatus.
